# EUROPEAN PATENT SPECIFICATION

(11) **EP 2 184 456 B1**
(45) Date of publication and mention of the grant of the patent: **11.07.2012**
(21) Application number: 08791871.0
(22) Date of filing: 30.07.2008
(51) Int. Cl.: F01N 3/08, B01D 53/94, F01N 3/24, F01N 3/36, F01N 3/025, F01N 3/20

(54) **EXHAUST GAZ PURIFICATION APPARATUS FOR AN INTERNAL COMBUSTION ENGINE**
ABGASREINIGUNGSVORRICHTUNG FÜR EINEN VERBRENNUNGSMOTOR
APPAREIL DE PURIFICATION DE GAZ D'ÉCHAPPEMENT POUR UN MOTEUR À COMBUSTION INTERNE

(30) Priority: 01.08.2007 JP 2007201076
(43) Date of publication of application: 12.05.2010
(73) Proprietor: Toyota Jidosha Kabushiki Kaisha, Toyota-shi, Aichi 471-8571 (JP)
(72) Inventor: TSUJIMOTO, Kenichi, Toyota-shi Aichi 471-8571 (JP); MORISHIMA, Akinori, Toyota-shi Aichi 471-8571 (JP)
(74) Representative: Kuhnen & Wacker
(86) International application number: PCT/JP2008/063640
(87) International publication number: WO 2009/017145

(56) References cited:
- JP-A- 09 013 955
- JP-A- 2005 076 530
- JP-A- 2005 127 257
- JP-A- 2005 188 395

## Description

### [TECHNICAL FIELD]

The present invention relates to an exhaust gas purification apparatus for an internal combustion engine.

### [BACKGROUND ART]

Some exhaust gas purification apparatuses are provided with a reducing agent addition valve, a precatalyst having an oxidizing ability, and an exhaust gas purification catalyst arranged in series in order from upstream in an exhaust passage of the internal combustion engine. In such apparatuses, when the reducing agent is added to the exhaust gas through the reducing agent addition valve, the reducing agent flows firstly into the precatalyst. Then, the reducing agent having been modified in the precatalyst is supplied to the exhaust gas purification catalyst.

The supply of the modified reducing agent to the exhaust gas purification catalyst tends to facilitate chemical reactions, such as the oxidation of the reducing agent, in the exhaust gas purification catalyst.

Patent Document 1 describes a technology in which a front oxidation catalyst, an oxidation catalyst, and a particulate filter are arranged in order from upstream in an exhaust passage of an internal combustion engine. According to this cited document 1, a bypass passage that bypasses the front oxidation catalyst and a flow path switching apparatus for switching the flow of the exhaust gas between the front oxidation catalyst and the bypass passage are provided.

Patent Document 2 discloses a technology in which an oxidation catalyst is provided in each of branch passages of the exhaust manifold that are connected to the respective cylinders, and a particulate filter is provided downstream of the collecting pipe of the exhaust manifold.
Patent Document 3 discloses a structure wherein a plurality of cylinders are divided into two cylinder groups, and the upstream side catalyst is provided in one of the exhaust passages at the upper stream side of a confluent part where the exhaust passages respectively connected to the two cylinder groups meet.
Patent Document 4 discloses a structure wherein a turbo-charger is provided at the upstream side of the exhaust gas purifying catalyst. Patent Document 5 discloses an arrangement wherein a fuel reforming catalyst is so formed that the exhaust gas flows between the outer peripheral surface of the fuel reforming catalyst and the inner wall of the exhaust pipe, the fuel reforming catalyst is located at a position at which a reducing agent is atomized, and the time for executing addition of the reducing agent is corrected based on the estimated reduction ratio of the reducing agent.
[Patent Document 1] Japanese Patent Application Laid-Open No. 2004-176571
[Patent Document 2] Japanese Patent Application Laid-Open No. 10(1998)-89054
[Patent Document 3] Japanese Patent No. 3796919 (JP 10-317950*)*
[Patent Document 4] Japanese Patent Application Laid-Open No. 2005-76530
[Patent Document 5] Japanese Patent Application Laid-Open No. 2005-127257

### [DISCLOSURE OF THE INVENTION]

### [Problem to be Solved by the Invention]

In order to have reducing agent added through a reducing agent addition valve modified in a precatalyst and to supply the modified reducing agent to an exhaust gas purification catalyst, it is necessary to raise the temperature of the precatalyst to an active temperature or keep the temperature of the precatalyst at an active temperature. However, the quantity of heat of the exhaust gas discharged from the internal combustion engine decreases due to heat radiation as the exhaust gas flows in the exhaust passage to the precatalyst. For this reason, it is sometimes difficult to heat the precatalyst to a sufficiently high temperature by the exhaust gas.

The present invention has been made in view of the above-described problem and has an object to provide a technology that enables an improvement in preferable promotion of the modification of reducing agent in a precatalyst in the case where the reducing agent is added through a reducing agent addition valve in order to supply the reducing agent to an exhaust gas purification catalyst.

### [Means for Solving the Problem]

According to the present invention, one end of an exhaust passage in which an exhaust gas purification catalyst is provided is connected to the exhaust manifold, and a precatalyst and a reducing agent addition valve are provided in the exhaust manifold. In addition, the precatalyst is designed in such a way that the exhaust gas flows through the gap between the outer circumference thereof and the inner wall surface of the exhaust manifold. Furthermore, the precatalyst and the reducing agent addition valve are arranged in such a way that the most part of the reducing agent added through the fuel addition valve flows into the precatalyst.

More specifically, an exhaust gas purification apparatus for an internal combustion engine according to the present invention comprises:
an exhaust manifold connected to the internal combustion engine;
an exhaust gas purification catalyst provided in an exhaust passage one end of which is connected to said exhaust manifold;
a precatalyst having an oxidizing ability provided in said exhaust manifold; and
a reducing agent addition valve provided in said exhaust manifold to add a reducing agent to exhaust gas, wherein
said precatalyst is configured in such a way that the exhaust gas flows through a gap between a circumferential surface thereof and an inner wall surface of said exhaust manifold, and
said precatalyst and said reducing agent addition valve are arranged in such a way that said precatalyst is located at a position toward which a spray jet of the reducing agent formed by the addition of the reducing agent through said reducing agent addition valve is directed.

In the apparatus according to the present invention, the quantity of heat carried away from the exhaust gas due to heat radiation during the period until the exhaust gas discharged from the internal combustion engine reaches the precatalyst is smaller than that in the case where the precatalyst is provided in the exhaust passage. Therefore, the temperature of the precatalyst can be raised by the exhaust gas more quickly, and the precatalyst can be maintained at a higher temperature by the exhaust gas.

Furthermore, in the apparatus according to the present invention, the exhaust gas flows through the gap between the outer circumferential surface of the precatalyst and the inner wall surface of the exhaust manifold. Consequently, an increase in the back pressure caused by the provision of the precatalyst in the exhaust manifold can be reduced.

In the apparatus according to the present invention, although the exhaust gas flows through the gap between the outer circumferential surface of the precatalyst and the inner wall surface of the exhaust manifold, the most part of the reducing agent added through the reducing agent addition valve flows into the precatalyst. Therefore, a larger amount of reducing agent can be modified in the precatalyst.

Therefore, according to the present invention, when the reducing agent is added through the reducing agent addition valve in order to supply the reducing agent to the exhaust gas purification catalyst, the modification of the reducing agent in the precatalyst can promoted in a more preferable manner.

In the apparatus according to the present invention, the temperature of the precatalyst and the temperature of the ambient atmosphere around the precatalyst are higher than those in the case where the precatalyst is provided in the exhaust passage. Therefore, the adhesion of particulate matter (which will be hereinafter referred to as PM) contained in the exhaust gas to the upstream end surface of the precatalyst can be reduced. Consequently, clogging can be prevented from occurring on the upstream end surface of the precatalyst. Furthermore, according to the present invention, since the reducing agent is modified in the exhaust manifold, the adhesion of the reducing agent in the exhaust passage can be reduced.

The present invention may be applied to an internal combustion engine equipped with a turbocharger. In this case, a turbine housing of the turbocharger is provided upstream of the exhaust gas purification catalyst in the exhaust passage.

Providing the precatalyst upstream of the turbine housing may lead to a deterioration in response characteristics in changing the supercharging pressure. However, according to the present invention, since the exhaust gas flows through the gap between the outer circumferential surface of the precatalyst and the inner wall surface of the exhaust manifold, the precatalyst can be prevented from hindering the flow of the exhaust gas into the turbine housing. Therefore, the aforementioned deterioration in response characteristics of the supercharging pressure can be prevented.

In the above-described case, the turbocharger is prevented from becoming immobile due to the adhesion of the reducing agent. In addition, since the reducing agent flows into the turbine housing together with the exhaust gas, the diffusion of the reducing agent can be more facilitated in the exhaust gas flowing into the exhaust gas purification catalyst.

In the above-described case, the turbocharger may be a variable geometry turbocharger having nozzle vanes. In this case, when the reducing agent is added through the reducing agent addition valve, the degree of opening of the nozzle vanes may be controlled so that the rotational speed of the turbocharger does not change with an increase in the quantity of heat generated in the precatalyst.

With this feature, a change in the supercharging pressure can be prevented from occurring at the time when the reducing agent is added through the reducing agent addition valve.

In the present invention, the precatalyst may be an NOx storage reduction catalyst. In this case, NOx in the exhaust gas can be removed in the exhaust manifold.

### (Advantageous Effect of the Invention)

According to the present invention, when the reducing agent is supplied through the reducing agent addition valve in order to supply the reducing agent to the exhaust gas purification catalyst, the modification of the reducing agent in the precatalyst can be promoted more preferably.

### [BRIEF DESCRIPTION OF THE DRAWINGS]

Fig. 1 is a diagram showing the general configuration of an internal combustion engine and its air-intake and exhaust system according to embodiment 1.
Fig. 2 is a diagram showing a first modification of the internal combustion engine and its air-intake and exhaust system according to embodiment 1.
Fig. 3 is a diagram showing a second modification of the internal combustion engine and its air-intake and exhaust system according to embodiment 1.
Fig. 4 is a diagram showing the general configuration of a turbocharger according to embodiment 2.
Fig. 5 is a flow chart showing a routine of a fuel addition control according to embodiment 2.

### [DESCRIPTION OF THE REFERENCE SIGNS]

- 1:: internal combustion engine,
- 2:: cylinder,
- 3:: fuel injection valve,
- 4:: intake passage,
- 5:: intake manifold,
- 6:: exhaust passage,
- 7:: exhaust manifold,
- 8:: turbocharger,
- 8a:: compressor housing,
- 8b:: turbine housing,
- 9:: NOx storage reduction catalyst,
- 10:: ECU,
- 11:: air flow meter,
- 12:: fuel addition valve,
- 13:: oxidation catalyst,
- 14:: air-fuel ratio sensor,
- 15:: temperature sensor,
- 17:: nozzle vane, and
- 18:: actuator.

### [THE BEST MODE FOR CARRYING OUT THE INVENTION]

In the following, a specific embodiment of the exhaust gas purification apparatus for an internal combustion engine according to the present invention will be described with reference to the drawings.

### <Embodiment 1>

### <General Configuration of Internal Combustion Engine and Air-Intake and Exhaust System Thereof>

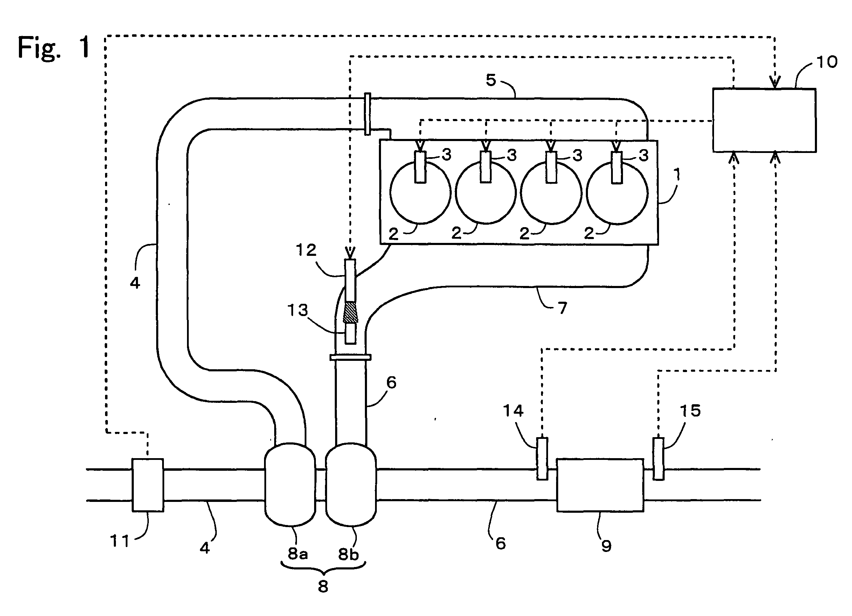

Fig. 1 is a diagram showing the general configuration of an internal combustion engine according to this embodiment and an air-intake and exhaust system thereof. The internal combustion engine 1 is a diesel engine having four cylinders 2 for driving a vehicle. Each cylinder 2 is equipped with a fuel injection valve 3 that injects fuel directly into the cylinder 2.

The internal combustion engine 1 is connected with an intake manifold 5 and an exhaust manifold 7. One end of an intake passage 4 is connected to the intake manifold 5. One end of an exhaust passage 6 is connected to the exhaust manifold 7.

An air flow meter 11 and a compressor housing 8a of a turbocharger (supercharger) 8 are provided in the intake passage 4. A turbine housing 8b of the turbocharger 8 is provided in the exhaust passage 6.

An NOx storage reduction catalyst (which will be simply referred to as the NOx catalyst hereinafter) 9 is provided in the exhaust passage 6 downstream of the turbine housing 8b. In this embodiment, the NOx catalyst 9 corresponds to the exhaust gas purification catalyst according to the present invention. Alternatively, a three-way catalyst, an oxidation catalyst, or a particulate filter on which an oxidation catalyst or an NOx catalyst, etc. is supported may be provided in place of the NOx catalyst 9. In this case, the three-way catalyst, the oxidation catalyst, and the particulate filter on which an oxidation catalyst or an NOx catalyst is supported each correspond to the exhaust gas purification catalyst according to the present invention.

An air-fuel ratio sensor 14 that senses the air-fuel ratio of the exhaust gas is provided in the exhaust passage 6 downstream of the turbine housing 8b and upstream of the NOx catalyst 9. In addition, a temperature senor 15 that senses the temperature of the exhaust gas is provided in the exhaust passage 6 downstream of the NOx catalyst 9.

In the exhaust manifold 7 are provided a fuel addition valve 12 that adds fuel as a reducing agent to the exhaust gas and an oxidation catalyst 13. The oxidation catalyst 13 is provided in the exhaust manifold 7 in the vicinity of the portion joining to the exhaust passage 6. In other words, the oxidation catalyst 13 is provided in the collecting pipe portion of the exhaust manifold 7. The outer diameter of the oxidation catalyst 13 is smaller than the inner diameter of the portion of the exhaust manifold 7 in which the oxidation catalyst 13 is disposed. From this follows that the cross sectional area of the oxidation catalyst 13 in a plane perpendicular to the direction of flow of the exhaust gas is smaller than the cross sectional area of the portion of the exhaust manifold 7 in which the oxidation catalyst 13 is provided in a plane perpendicular to the direction of flow of the exhaust gas. Consequently, a portion of the exhaust gas passes through the oxidation catalyst 13, and the other portion of the exhaust gas flows through the gap between the outer circumferential surface of the oxidation catalyst 13 and the inner wall surface of the exhaust manifold 7.

The fuel addition valve 12 is provided in the exhaust manifold 7 in such a way that fuel is added toward the upstream end surface of the oxidation catalyst 13. That is, the fuel addition valve 12 is disposed in such a way that the oxidation catalyst 13 is located at a position to which the spray jet of fuel, which is formed as fuel is added through the fuel addition valve 12, is directed (the spray jet of fuel that is formed as fuel is added through the fuel addition valve 12 being represented by the hatched portion in Fig. 1). Thus, the most part of the fuel added through the fuel addition valve 12 flows into the oxidation catalyst 13.

In this embodiment, the oxidation catalyst 13 corresponds to the precatalyst according to the present invention. The oxidation catalyst 13 is not limited to be an oxidation catalyst, but it may be any catalyst having an oxidizing ability. In this embodiment, the fuel addition valve 12 corresponds to the reducing agent addition valve according to the present invention.

An electronic control unit (ECU) 10 that controls the operation state of the internal combustion engine 1 is annexed to the internal combustion engine 1. The ECU 10 is electrically connected with the air flow meter 11, the air-fuel ratio sensor 14, and the temperature sensor 15. Output signals of them are input to the ECU 10. The ECU 10 estimates the temperature of the NOx catalyst 9 based on a measurement value of the temperature sensor 15.

The ECU 10 is electrically connected with the fuel injection valves 3 and the fuel addition valve 12. They are controlled by the ECU 10.

### <Addition of Fuel>

In this embodiment, fuel is added through the fuel addition valve 12, when the temperature of the NOx catalyst 9 is to be raised, and when NOx or SOx stored in the NOx catalyst 9 is to be reduced. The fuel added through the fuel addition valve 12 flows into the oxidation catalyst 13. At least a portion of the fuel flowing into the oxidation catalyst 13 is modified in the oxidation catalyst 13. The fuel modified in the oxidation catalyst 13 is supplied to the NOx catalyst 9.

As the fuel modified as above is supplied to the NOx catalyst 9, the oxidation reaction of the fuel and the reduction reaction of NOx or SOx with the fuel functioning as the reducing agent that occur in the NOx catalyst 9 tend to be promoted. Therefore, when fuel is added through the fuel addition valve 12 in order to raise the temperature of the NOx catalyst 9, the temperature of the NOx catalyst 9 can be raised more efficiently by the heat of oxidation generated in the oxidation of fuel. Furthermore, when fuel is added through the fuel addition valve 12 in order to reduce NOx or SOx stored in the NOx catalyst 9, they can be reduced more efficiently.

In this embodiment, the oxidation catalyst 13 is disposed in the exhaust manifold 7. In this case, the quantity of heat that is carried away from the exhaust gas due to heat radiation until the exhaust gas discharged from the internal combustion engine 1 reaches the oxidation catalyst 13 is smaller than in the case where the oxidation catalyst 13 is disposed in the exhaust passage 6. In consequence, the temperature of the oxidation catalyst 13 can be raised more quickly by the exhaust gas, and the temperature of the oxidation catalyst 13 can be kept higher by the exhaust gas.

Therefore, it is possible to promote the modification of fuel in the oxidation catalyst 13 in a wider operation range without performing the addition of fuel through the fuel addition valve 12, sub fuel injection through the fuel injection valve(s) 3, or heating by an electric heater etc. to raise the temperature of the oxidation catalyst 13.

In this embodiment, the exhaust gas can flow through the gap between the outer circumferential surface of the oxidation catalyst 13 and the inner wall surface of the exhaust manifold 7. Consequently, an increase in the back pressure caused by the provision of the oxidation catalyst 13 in the exhaust manifold 7 can be reduced. In consequence, influences on the operation state of the internal combustion engine 1 caused by the provision of the oxidation catalyst 13 in the exhaust manifold 7 can be made smaller. In addition, since the oxidation catalyst 13 is prevented from hindering the flow of the exhaust gas into the turbine housing 8b, a deterioration in the response characteristics in changing the supercharging pressure can be prevented.

Furthermore, although this embodiment is configured in such a way that the exhaust gas can flow through the gap between the outer circumferential surface of the oxidation catalyst 13 and the inner wall surface of the exhaust manifold 7, the most part of the fuel added through the fuel addition valve 12 flows into the oxidation catalyst 13. Therefore, a major quantity of fuel can be modified in the oxidation catalyst 13. Consequently, a major quantity of modified fuel can be supplied to the NOx catalyst 9.

As described above, according to this embodiment, when fuel is added through the fuel addition valve 12 in order to supply fuel to the NOx catalyst 9, the modification of fuel in the oxidation catalyst 13 can be promoted in a more preferably manner. Therefore, the temperature of the NOx catalyst 9 can be raised more preferably, and NOx or Sox stored in the NOx catalyst 9 can be reduced more preferably.

Furthermore, in this embodiment, the temperature of the oxidation catalyst 13 and the temperature of the ambient atmosphere around the oxidation catalyst 13 are higher than those in the case in which the oxidation catalyst 13 is provided in the exhaust passage 6. In consequence, PM contained in the exhaust gas is unlikely to adhere to the upstream end surface of the oxidation catalyst 13. Therefore, clogging can be prevented from occurring on the upstream end surface of the oxidation catalyst 13.

Still further, in this embodiment, fuel is modified in the exhaust manifold 7. In consequence, the adhesion of fuel in the exhaust passage 6 can be reduced. In addition, the adhesion of fuel to a turbine wheel or other components in the turbine housing 8b can also be reduced. Therefore, the turbocharger 8 can be prevented from becoming immobile.

Still further, in this embodiment, the fuel added through the fuel addition valve 12 flows into the turbine housing 8b together with the exhaust gas. Therefore, the diffusion of the fuel can be more facilitated in the exhaust gas flowing into the NOx catalyst 9. This facilitates the oxidation reaction of the fuel and the reduction reaction of NOx or SOx using the fuel as a reducing agent, in the NOx catalyst 9.

The modification ratio of fuel in the oxidation catalyst 13 upon the addition of fuel through the fuel addition valve 12 (i.e. (the quantity of fuel modified in the oxidation catalyst 13)/(the quantity of fuel added through the fuel addition valve 12) x 100) varies depending on the temperature of the oxidation catalyst 13 and the flow rate of the exhaust gas. In the case where fuel is added through the fuel addition valve 12 in order to reduce NOx stored in the NOx catalyst 9, the higher the modification ratio of fuel in the oxidation catalyst 13 is, the more the reduction of NOx in the NOx catalyst 9 is promoted. Therefore, the higher the modification ratio of fuel in the oxidation catalyst is, the smaller the quantity of added fuel with which NOx stored in the NOx catalyst 9 can be adequately reduced is.

In view of the above, in the case where fuel is added through the fuel addition valve 12 in order to reduce NOx stored in the NOx catalyst 9, the modification ratio of fuel in the oxidation catalyst 13 may be estimated based on the temperature of the oxidation catalyst 13 and the flow rate of the exhaust gas, and the quantity of fuel added through the fuel addition valve 12 may be corrected based on the modification ratio. Thereby, the fuel economy can be prevented from being made worse by the addition of fuel through the fuel addition valve 12. In addition, the quantity of fuel flowing out of the NOx catalyst 9 without being used in the reduction of NOx can be reduced. In connection with the above, the temperature of the oxidation catalyst 13 can be estimated based on, for example, the operation state of the internal combustion engine 1.

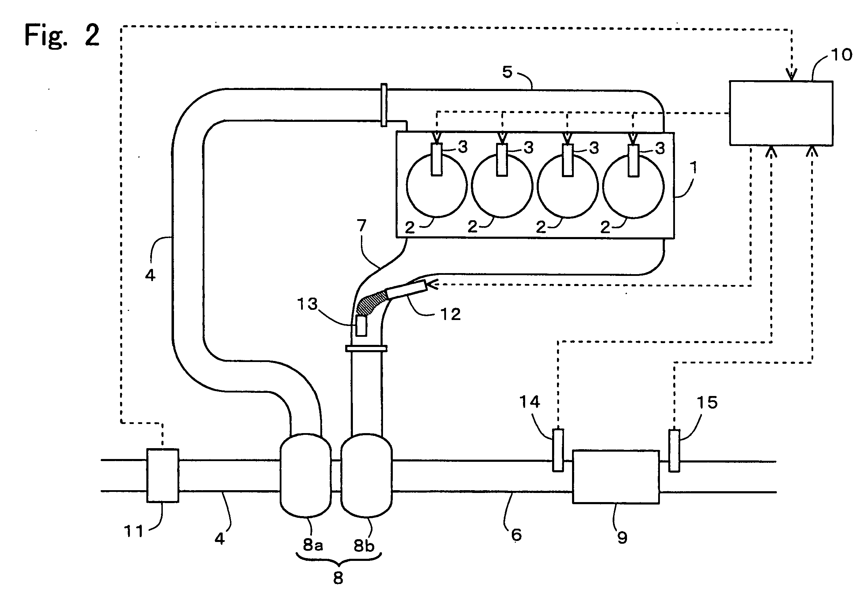

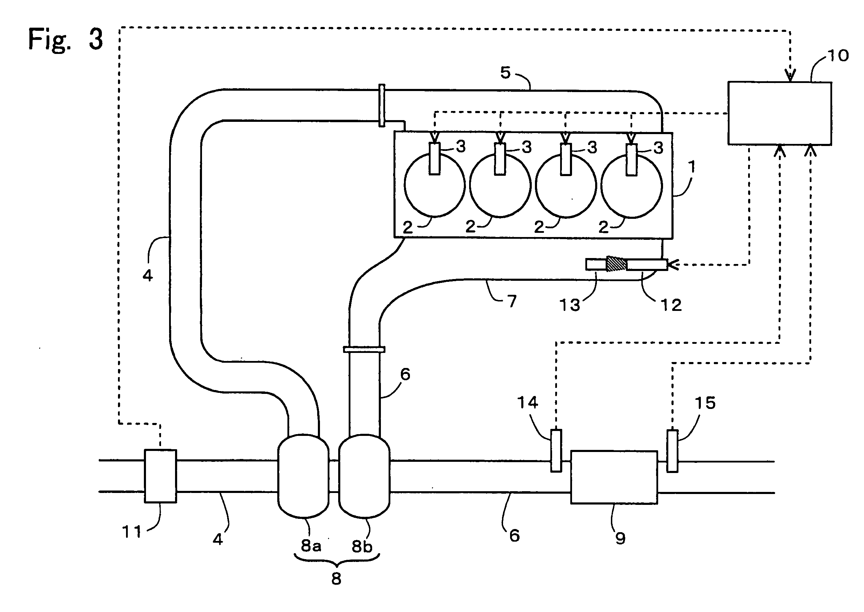

The arrangement of the oxidation catalyst 13 and the fuel addition valve 12 in the exhaust manifold 7 is not limited to the arrangement shown in Fig. 1. Figs. 2 and 3 show other arrangements of the oxidation catalyst 13 and the fuel addition valve 12 in the exhaust manifold 7. (In Figs. 2 and 3 also, the spray jet of fuel that is formed as fuel is added through the fuel addition valve 12 is represented by the hatched portion.)

In the case of the arrangement shown in Fig. 2, the fuel added through the fuel addition valve 12 strikes on the inner wall surface of the exhaust manifold 7, and the most part thereof is involved in the stream of the exhaust gas to flow into the oxidation catalyst 13. In this way, the fuel addition valve 12 and the oxidation catalyst 13 may be arranged in such a way that the oxidation catalyst 13 is located at a position toward which the sprayed fuel added through the fuel addition valve 12 is directed.

In the case of the arrangement shown in Fig. 3, the oxidation catalyst 13 is disposed at a position in the exhaust manifold 7 distant from the neighborhood of the portion at which the exhaust manifold 7 is joined to the exhaust passage 6. In this case, the exhaust gas discharged only from the cylinder disposed upstream of the oxidation catalyst 13 with respect to the stream of the exhaust gas in the exhaust manifold 7 passes thorough the oxidation catalyst 13. On the other hand, the exhaust gas discharged from the cylinders disposed downstream of the oxidation catalyst 13 with respect to the stream of the exhaust gas in the exhaust manifold 7 flows into the exhaust passage 6 without passing through the oxidation catalyst 13. Consequently, an increase in the back pressure caused by the provision of the oxidation catalyst 13 in the exhaust manifold 7 can be further reduced. In this case also, the cross sectional area of the oxidation catalyst 13 in a plane perpendicular to the direction of flow of the exhaust gas is smaller than the cross sectional area of the portion of the exhaust manifold 7 in which the oxidation catalyst 13 is provided in a plane perpendicular to the direction of flow of the exhaust gas. Consequently, an increase in the back pressure in the region upstream of the oxidation catalyst 13 can be made small. In this case also, the fuel addition valve 12 is disposed in the exhaust manifold 7 in such a way as to add fuel toward the upstream end surface of the oxidation catalyst 13. In consequence, the most part of the fuel added through the fuel addition valve 12 flows into the oxidation catalyst 13. Therefore, a larger quantity of fuel can be modified in the oxidation catalyst 13.

### <Embodiment 2>

### <General Configuration of Turbocharger>

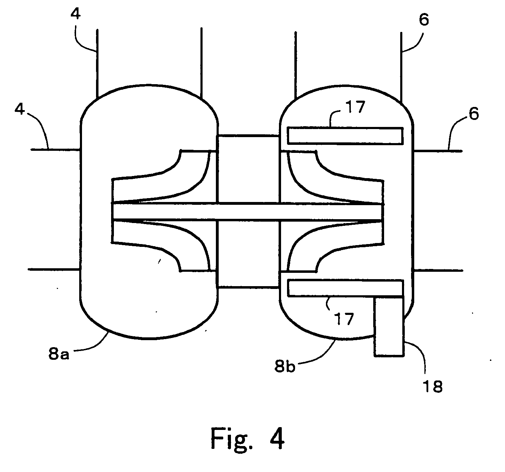

Fig. 4 is a diagram showing the general configuration of the turbocharger 8 according to this embodiment. The turbine housing 8b of the turbocharger 8 according to this embodiment has a plurality of blade-like nozzle vanes 17 attached along the circumferential direction of the turbine wheel. The nozzle vanes 17 are driven by an actuator 18.

As the degree of opening of the nozzle vanes 17 is changed by the actuator 18, the gaps between the adjacent nozzle vanes 17 change. This causes a change in the flow speed of the exhaust gas blown onto the turbine wheel, which in turn causes a change in the rotational speed of the turbocharger 8. In consequence, the supercharging pressure in the internal combustion engine 1 changes.

The actuator 18 is electrically connected with the ECU 10 and controlled by the ECU 10. The construction of the internal combustion engine and its air-intake and exhaust system other than the turbocharger 8 are the same as that in embodiment 1. Therefore, the like components will be denoted by like reference numerals, and descriptions thereof will be omitted.

### <Control of Nozzle Vane Opening Degree>

As the fuel added through the fuel addition valve 12 flows into the oxidation catalyst 13, a portion of the fuel is oxidized in the oxidation catalyst 13. For this reason, performing the addition of fuel through the fuel addition valve 12 may sometimes cause a rise in the temperature of the exhaust gas flowing into the turbine housing 8b. This may consequently lead to an increase in the rotational speed of the turbocharger 8.

In view of this, in this embodiment when fuel is added through the fuel addition valve 12, the degree of opening of the nozzle vanes 17 is controlled so that the rotational speed of the turbocharger 8 does not change.

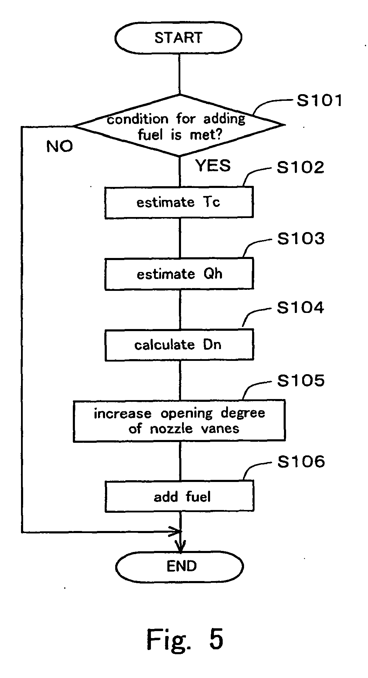

In the following, a routine of the fuel addition control according to this embodiment will be described with reference to the flow chart shown in Fig. 5. This routine is stored in the ECU 10 in advance and executed repeatedly at predetermined intervals during the operation of the internal combustion engine 1.

In this routine, first in step S101, the ECU 10 determines whether or not a condition for performing the addition of fuel through the fuel addition valve 12 is met. Here, the condition for performing the addition of fuel is the condition for performing heating-up of the NOx catalyst 9 or the condition for performing the reduction of NOx or SOx stored in the NOx catalyst 9. If the determination in step S101 is affirmative, the ECU 10 proceeds to step S102, and if the determination is negative, the ECU 10 once terminates execution of this routine.

In step S102, the ECU 10 estimates the temperature Tc of the oxidation catalyst 13 based on the operation state of the internal combustion engine 1.

Then, the ECU 10 proceeds to step S103, where it estimates the quantity of heat Qh generated by the oxidation of fuel in the oxidation catalyst 13 as the addition of fuel through the fuel addition valve 12 is performed. The quantity of generated heat Qh can be estimated based on the temperature Tc of the oxidation catalyst 13, the quantity of fuel added through the fuel addition valve 12, and the operation state of the internal combustion engine 1.

Then, the ECU 10 proceeds to step S104, where it calculates the opening degree increase Dn of the nozzle vanes 17 based on the quantity of generated heat Qh. The opening degree increase Dn is calculated so that even when the heat (the quantity of which is the quantity of generated heat Qh) is generated by oxidation in the oxidation catalyst 13 by the addition of fuel through the fuel addition valve 12 whereby a rise in the temperature of the exhaust gas flowing into the turbine housing 8b is caused, the rotational speed of the turbocharger 8 can be maintained substantially equal to that before the addition of fuel by increasing the degree of opening of the nozzle vanes 17 by an amount equal to the opening degree increase Dn. The relationship between the quantity of generated heat Qh and the opening degree increase Dn is calculated beforehand based on, for example, experiments, and stored in the ECU 10 as a map.

Then, the ECU 10 proceeds to step S105, where it increases the degree of opening of the nozzle vanes 17 by an amount equal to the opening degree increase Dn.

Then, the ECU 10 proceeds to step S106, where it executes the addition of fuel through the fuel addition valve 12. Thereafter, the ECU 10 once terminates execution of this routine.

According to the above-described routine, when fuel is added through the fuel addition valve 12, the rotational speed of the turbocharger 8 is prevented from increasing with an increase in the quantity of heat generated in the oxidation catalyst 13. Consequently, the supercharging pressure in the internal combustion engine 1 can be prevented from changing through the addition of fuel through the fuel addition valve 12.

In embodiments 1 and 2, the oxidation catalyst 13 may be an NOx catalyst. If this is the case, NOx in the exhaust gas can be removed in the exhaust manifold 7. Furthermore, NOx stored in the NOx catalyst can be reduced as fuel is added through the fuel addition valve 12 in order to raise the temperature of the NOx catalyst 9 or reduce NOx stored in the NOx catalyst 9.

## Claims

1. An exhaust gas purification apparatus for an internal combustion engine (1) comprising:
an exhaust manifold (7) connected to the internal combustion engine;
an exhaust gas purification catalyst (9) provided in an exhaust passage, one end of which is connected to said exhaust manifold;
a precatalyst (13) having an oxidizing ability provided in said exhaust manifold; and
a reducing agent addition valve (12) provided in said exhaust manifold to add a reducing agent to exhaust gas, wherein
said precatalyst is configured in such a way that the exhaust gas flows through a gap between a circumferential surface thereof and an inner wall surface of said exhaust manifold, and
said precatalyst and said reducing agent addition valve are arranged in such a way that said precatalyst is located at a position toward which a spray jet of the reducing agent formed by the addition of the reducing agent through said reducing agent addition valve is directed.

2. An exhaust gas purification apparatus for an internal combustion engine according to claim 1, wherein the internal combustion engine is an internal combustion engine equipped with a turbocharger (8), and a turbine housing (8b) of said turbocharger is provided upstream of said exhaust gas purification catalyst in said exhaust passage.

3. An exhaust gas purification apparatus for an internal combustion engine according to claim 2, wherein said turbocharger is a variable geometry turbocharger having nozzle vanes, and
when the reducing agent is added through the reducing agent addition valve, the degree of opening of said nozzle vanes is controlled so that the rotational speed of said turbocharger does not change with an increase in the quantity of heat generated in said precatalyst.

4. An exhaust gas purification apparatus for an internal combustion engine according to any one of claims 1 to 3, wherein said precatalyst is an NOx storage reduction catalyst.

5. An exhaust gas purification apparatus for an internal combustion engine according to any one of claims 1 to 4, further comprising estimation means (10) for estimating a modification ratio of the reducing agent in the precatalyst,
wherein the quantity of reducing agent added through the reducing agent addition valve is corrected based on the modification ratio estimated by said estimation means.

## Patentansprüche

1. Abgasreinigungsvorrichtung für einen Verbrennungsmotor (1), aufweisend:
einen Auspuffkrümmer (7), der mit dem Verbrennungsmotor verbunden ist;
einen Abgasreinigungskatalysator (9), der in einer Abgasleitung angeordnet ist, wobei ein Ende desselben mit dem Auspuffkrümmer verbunden ist;
einen Vorkatalysator (13) mit einer Oxidationsfähigkeit, der in dem Auspuffkrümmer angeordnet ist; und
ein Reduktionsmittel-Hinzufügungsventil (12), das in dem Auspuffkrümmer angeordnet ist, um einem Abgas ein Reduktionsmittel hinzuzufügen, wobei
der Vorkatalysator derart konfiguriert ist, dass das Abgas durch einen Spalt zwischen einer Umfangsoberfläche desselben und einer inneren Wandoberfläche des Auspuffkrümmers strömt, und
der Vorkatalysator und das Reduktionsmittel-Hinzufügungsventil derart angeordnet sind, dass der Vorkatalysator an einer Position angeordnet ist, auf die ein Sprühstrahl des Reduktionsmittels, der durch die Hinzufügung des Reduktionsmittels durch das Reduktionsmittel-Hinzufügungsventil erzeugt wird, gelenkt wird.

2. Abgasreinigungsvorrichtung für einen Verbrennungsmotor nach Anspruch 1, wobei
der Verbrennungsmotor ein Verbrennungsmotor ist, der mit einem Turbolader (8) ausgestattet ist, und ein Turbinengehäuse (8b) des Turboladers stromauf des Abgasreinigungskatalysators in der Abgasleitung angeordnet ist.

3. Abgasreinigungsvorrichtung für einen Verbrennungsmotor nach Anspruch 2, wobei der Turbolader ein eine variable Geometrie aufweisender Turbolader mit Düsenlamellen ist, und,
wenn das Reduktionsmittel durch das Reduktionsmittel-Hinzufügungsventil hinzugefügt wird, der Öffnungsgrad der Düsenlamellen so gesteuert wird, dass die Drehzahl des Turboladers sich nicht mit einer Zunahme der in dem Vorkatalysator erzeugten Wärmemenge verändert.

4. Abgasreinigungsvorrichtung für einen Verbrennungsmotor nach einem der Ansprüche 1 bis 3, wobei der Vorkatalysator ein NOx-Speicherreduktionskatalysator ist.

5. Abgasreinigungsvorrichtung für einen Verbrennungsmotor nach einem der Ansprüche 1 bis 4, ferner aufweisend eine Schätzeinrichtung (10) zum Schätzen eines Modifizierungsverhältnisses des Reduktionsmittels in dem Vorkatalysator,
wobei die Menge des durch das Reduktionsmittel-Hinzufügungsventil hinzugefügten Reduktionsmittels basierend auf dem Modifizierungsverhältnis korrigiert wird, das durch die Schätzeinrichtung geschätzt wird.

## Revendications

1. Appareil de purification de gaz d'échappement pour un moteur à combustion interne (1) comportant :
un collecteur d'échappement (7) relié au moteur à combustion interne ;
un catalyseur de purification de gaz d'échappement (9) prévu dans un passage d'échappement, dont une extrémité est relié audit collecteur d'échappement ;
un pré-catalyseur (13) ayant une capacité d'oxydation dans ledit collecteur d'échappement ; et
une soupape d'addition d'agent de réduction (12) prévue dans ledit collecteur d'échappement afin d'ajouter un agent de réduction au gaz d'échappement, dans lequel
ledit pré-catalyseur est configuré d'une manière telle que le gaz d'échappement s'écoule à travers un espace entre une surface circonférentielle de celui-ci et une surface de paroi intérieure dudit collecteur d'échappement, et
ledit pré-catalyseur et ladite soupape d'addition d'agent de réduction sont disposés d'une manière telle que ledit pré-catalyseur se trouve dans une position vers laquelle un jet pulvérisé de l'agent de réduction formé par l'addition de l'agent de réduction par ladite soupape d'addition d'agent de réduction est dirigé.

2. Appareil de purification de gaz d'échappement pour un moteur à combustion interne selon la revendication 1, dans lequel le moteur à combustion interne est un moteur à combustion interne pourvu d'un turbocompresseur (8), et un carter de turbine (8b) dudit turbocompresseur est prévu en amont dudit catalyseur de purification de gaz d'échappement dans ledit passage d'échappement.

3. Appareil de purification de gaz d'échappement pour un moteur à combustion interne selon la revendication 2, dans lequel ledit turbocompresseur est un turbocompresseur de géométrie variable ayant des aubes, et
quand l'agent de réduction est ajouté par la soupape d'addition d'agent de réduction, le degré d'ouverture desdites aubes est commandé de telle sorte que la vitesse de rotation dudit turbocompresseur ne change pas avec une augmentation de la quantité de la chaleur produite dans ledit pré-catalyseur.

4. Appareil de purification de gaz d'échappement pour un moteur à combustion interne selon l'une quelconque des revendications 1 à 3, dans lequel ledit pré-catalyseur est un catalyseur de réduction de stockage de NOx.

5. Appareil de purification de gaz d'échappement pour un moteur à combustion interne selon l'une quelconque des revendications 1 à 4, comportant en outre des moyens d'estimation (10) destinés à estimer un taux de modification de l'agent de réduction dans le pré-catalyseur,
la quantité d'agent de réduction ajoutée par la soupape d'addition d'agent de réduction étant corrigée sur la base du taux de modification estimé par lesdits moyens d'estimation.
